# EUROPEAN PATENT SPECIFICATION

(11) **EP 1 655 216 B1**
(45) Date of publication and mention of the grant of the patent: **22.08.2007**
(21) Application number: 04742073.2
(22) Date of filing: 22.07.2004
(51) Int. Cl.: B62M 1/02

(54) **MODULAR CONFIGURATION FOR PEDAL TRACTION SYSTEMS BY MEANS OF INDEPENDENT CONNECTING RODS WITH NO NEUTRAL GEAR**
MODULARE KONFIGURATION FÜR PEDALENANTRIEBSSYSTEM MITTELS UNABHÄNGIGER VERBINDUNGSSTANGEN OHNE LEERLAUFGANG
CONFIGURATION MODULAIRE POUR SYSTEMES DE TRACTION PAR PEDALES AU MOYEN DE MANIVELLES INDEPENDANTES SANS POINT MORT

(30) Priority: 25.07.2003 ES 200301771
(43) Date of publication of application: 10.05.2006
(73) Proprietor: Carrasco Vergara, Pablo, 29017 Malaga (ES)
(72) Inventor: Carrasco Vergara, Pablo, 29017 Malaga (ES)
(74) Representative: Lorente Berges, Ana
(86) International application number: PCT/ES2004/000345
(87) International publication number: WO 2005/012069

(56) References cited:
- WO-A1-97/20726
- WO-A1-99/29564
- CH-A- 359 050
- ES-A1- 2 189 601
- US-A- 4 816 009
- US-A- 5 067 370

## Description

The present invention contains a series of mechanical improvements, mainly applicable to bicycles, concerning the use and manufacture of a pedaling system based on the elimination of the cycle dead centers, whose operation at biomechanical level has proved to be better than that of conventional cranks and chain wheels on bicycles.

This optimized pedaling biomechanics makes use of independent cranks, so that each crank moves more slowly during pedal downstroke than during pedal upstroke, whereby it is ensured that both cranks never coincide at the pedaling dead centers, one top and the other bottom. The result of this kinematics is that the force that the system requires of the legs during pedal downstroke, when the knee is extended, is greater than during its ascent, when the knee is flexed, which matches up better to the thrust potential of the leg muscles during the cycle.

With regard to said pedaling system, which makes use of this optimized biomechanics and in respect of whose mechanical configuration the improvements to be patented will be set forth herein, it is the case of a mechanism that replaces the conventional bottom bracket and cranks and which may be coupled to the bottom bracket shell of bicycles and the like. It consists mainly of:
- A bottom bracket spindle with the bearings and the support needed for it to be coupled to said bottom bracket shell;
- A power plate, which turns at its center around a axis separated from and parallel to the bottom bracket spindle and which is the system power output, normally coupling chain wheels, although it may also be via a belt or some other drive means;
- An eccentric support, attachable to the bottom bracket shell by one of its sides and which has the function of providing support for this power plate with freedom of rotation;
- Two independent cranks: the first is free-turning in relation to the bottom bracket spindle and is positioned at the side of the power plate; and the second is integral with said spindle and is located at the opposite end of same;
- A transfer arm, anchored to the bottom bracket spindle and positioned on the side of the power plate, which is integral with said second crank by means of the bottom bracket spindle; and
- Two links, the first connected by one of its ends to the aforesaid first crank and by the other end to the aforesaid power plate, and the second connected by one of its ends to the aforesaid transfer arm and by the other end to the power plate, being these four joints per swivel pin, with the two joints corresponding to the power plate being positioned at opposite points of said plate.

Due to this configuration, when the power plate rotates at constant speed, the cranks will vary their speed and, therefore, their relative gearing or drive ratio. This is due to the offsetting of said plate since, as it turns, it causes the effective distance to vary, whereby each link connects the power plate to its crank or transfer arm. Insofar as biomechanics is concerned, with this system we achieve higher levels of pedaling power and consistency, less cardiovascular effort, and a lower fatigue level at the knee joint.

Said links can be arranged in such a way that each power plate swivel pin goes behind the corresponding swivel pin on the first crank and the transfer arm, in which case they act as pullers, or in the opposite disposition, as pushers. The resultant biomechanics of both configurations is different, as each one has its advantages, although in comparison with the conventional pedaling system their differences may be considered insignificant since everything stated so far is valid in both cases.

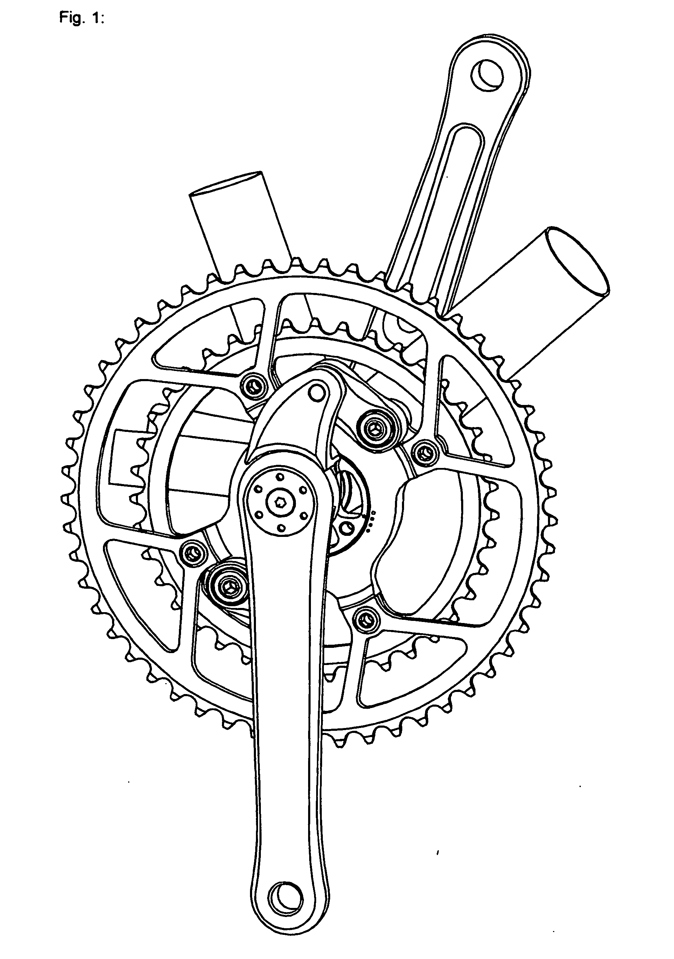

Hereafter when we refer to said pedaling system we will call it: the Reference Mechanical System (RMS), and by way of example see *Figure 1.*

### STATE OF THE ART

There have been a great number of attempts in the history of the bicycle to increase pedaling efficacy by reducing the effect of the dead centers, several of them by means of use of independent cranks, which hitherto have proved to be the only biomechanically effective way of achieving it. From amongst so many attempts or proposals it may be said that the RMS is the most evolved and at the same time simplest one, and thus the only one that has survived today as an alternative to the conventional pedaling system.

However, there have been several patents and patent applications that have appeared to date in which different mechanical configurations are presented, all of them undoubtedly corresponding to the RMS, whether in each document as a whole or only in part of same. The first one that has come to the knowledge of the inventor of the present patent application is the Swiss patent CH359050, with Austrian priority of 26 January 1957, although in that document the RMS is spoken of as something already known and, therefore, belonging to the state of the art at that time. In chronological order we may mention:
- CH 359050 (with a priority date of 26/01/1957)
- FR 2584671 (with a priority date of 09/07/1985)
- US 4,816,009 (with a priority date of 09/08/1988)
- US 5,067,370 (with a priority date of 13/06/1989)
- JP 06048361 (with a priority date of 28/07/1992)
- WO 95/19909 (with a priority date of 19/01/1994)
- US 6,085,613 (with a priority date of 07/12/1995)
- US 6,367,352 (with a priority date of 09/12/1997)
- WO 02/28680 (with a priority date of 03/10/2000)

The last one is of the same inventor as the present patent application. The company Rotor Componentes Tecnológicos S.L., the holder of said patent WO 02/28680, is currently exploiting it, marketing the corresponding mechanism under the trademark ROTOR SYSTEM, which has been distributed in 14 countries up till now. At the end of 2000 an initial version of said mechanism was first marketed with the name, to which *Figure 1* refers, to be later replaced towards the middle of 2002 by a new version, the RS03.

An earlier attempt had been made to market another mechanism of the RMS type, corresponding to patent US 6,367,352. There were two different versions, under the Swiss trademark SWEETER, although only a very few units were sold locally within the bounds of French-speaking Switzerland. Both versions of the SWEETER, however, did not succeed in overcoming the technical problems presented by production of the RMS and in 2000 the SWEETER product ceased to be marketed and the proprietary company closed down.

Although the system in question has a favorable acceptance on the part of the user in terms of biomechanical performance and convenience, the technical problems presented have no ready solution. We may group these problems into two categories: mechanical strength and maintenance. In addition, due to the complexity of the mechanical system, high additional costs of assembly and, above all, of subsequent handling (for maintenance).

Mechanical strength was the first problem to be overcome as the internal forces stemming from the actual configuration of the RMS are very high compared with the forces entailed in pedaling, yet the volume available between both feet while pedaling is quite low, as it is indeed a complicated matter to reduce the structural requirement of the parts merely by size.

This problem was resolved at product level:
■ increasing as much as possible the distances of each swivel pin from the center of rotation of its respective part, so that the internal forces drop in the same proportion,
■ taking maximum advantage of the volume available so as to accommodate the largest possible bearings, and
■ making use of a combined set of roller, needle and ball bearings, which enables the force-volume ratio to be maximized at every critical point on the system.

When mechanical strength has been overcome, the mechanical problems that limit the life of the RMS are water and the loss of lubrication, along with the complicated handling of the system for after-sales servicing. This is due to the fact that it is an external mechanism that has to withstand adverse conditions of humidity and cleanliness. In addition, the washing of the bicycle or vehicle where it is installed is most often the main cause of the entry of water and thereby the displacement and deterioration of the lubricant. In this case, oxide formation puts an end to the life of the bearings.

The problem of water is the same as in the case of conventional pedaling systems, but then consequences for maintenance are not. Manufacturers recommend that a jet of water should not be used for washing, but that does not solve the problem, yet, being separate parts - bottom bracket spindle, cranks and chainrings - the user may disassemble the bottom bracket, the only part where there are bearings, and clean and grease it, or in any case discard and replace it with a new one; and that will be the maximum cost, which, in comparison with the whole assembly, is relatively moderate.

Thus, in the case of the RMS the problem is considerably enlarged as there is a good number of bearings and moving parts which could eventually develop play, seize or break on account of water, and all these have a more external location than the spindle and are therefore more exposed. In addition, at five points of rotation (the four swivel pins and the first crank), rotation is oscillatory instead of continuous, which makes it harder for them to be kept properly lubricated.

On the one hand, therefore, it is necessary for the mechanism to be provided, at all the accesses to the bearings from the outside, with proper sealing by means of oil seals and the like which will minimize the possible entry of water; and, on the other hand, straightforward maintenance should be possible that could be carried out by the user himself and which would comprise cleaning and greasing. In any case, the performance of after-sales jobs should be simple and feasible for the technical service of any store or dealer, without the need for compulsory supervision by the manufacturer. However, being a complex mechanism, in which most of the parts are attached to one another securely, the difficulty in cleaning, lubricating or replacing any one of the bearings or parts leads to an extraordinary after-sales cost, capable of making its marketing nonviable.

In view of the foregoing, the experience of the different attempts to bring the RMS onto the market to date may be summarized as follows: first of all, products were developed that did not succeed in achieving mechanical reliability or watertightness; then the afore-mentioned ROTOR SYSTEM RCK came onto the market, and although it did achieve mechanical reliability after a number of improved versions, it did not meet the necessary watertightness and maintenance feasibility requirements and even though there are still a good many units working on the market, the after-sales service problems have brought marketing to a halt and the company to the verge of bankruptcy; and finally the ROTOR SYSTEM RS03.

Said RS03 is still being marketed today and it has overcome the usual problems of watertightness, thanks to carefully designed sealing. As regards maintenance, it has greasing points at every swivel pin and on the bottom bracket spindle, although re-lubrication is not easy to achieve due to such a sealed design, so it continues to be deficient in terms of lubrication. But above all it has one main shortcoming in after-sales servicing, just like all the previous ones.

This shortcoming of the RS03 affects all the versions corresponding to the RMS the same and it is due to the fact that the main parts are firmly attached to one another, forming a hyperstatic structure in an axial direction: each link is anchored on one side to the power plate and on the other to the first crank or transfer arm; the first crank and transfer arm are in turn anchored to the bottom bracket spindle; this is fixed to its support or cartridge, which couples the eccentric support; and finally on this eccentric support, the power plate. Thus, each of the parts, with the exception of the left crank, is at least doubly connected to the others and, what is more, by means of mechanical connections that are the ones that have to assure the structural integrity of the RMS. In this way, in order to be able to remove any of the different parts it is necessary to release these mechanical connections, in particular the connections between the swivel pins and links, which have a crucial function in the RMS and which, naturally therefore, require special tools, besides specific assembly requirements, such as tightening torques or the use of special adhesives.

Therefore, no after-sales servicing of the system that is not carried out by skilled technical personnel is feasible, which in most cases means extra costs: disassembling the bicycle, sending the RMS to the technical service, the handling that may be required by this after-sales servicing, return carriage and, lastly, installation on the bicycle. In addition, if the maintenance is not correct, the life of the product will be shortened, which entails the added cost of replacing parts at certain intervals.

Furthermore, these technical services become necessary at every distribution center, which raises the end retail cost of the product.

Last but not least and as a result of the problems represented by water for the RMS, the necessary sealing executed on the RS03 represents considerable no-load friction. This is propitiated by the use at the swivel pins of O-rings with axial tightening towards the bearing, necessary in its design due to the shortage of space for the use of oil seals on both sides. At mechanical level, this solution entails certain friction losses, which are reflected in losses of power and, therefore, poorer sporting performance on the user's part; and at commercial level, a certain initial rejection on the part of potential customers sensitive to this aspect, as, before being used, the RS03 product is characterized by an appreciable close fitting of the mechanism, which produces a sensation of tightness, although this gradually lessens with use.

### SUMMARY OF THE INVENTION

The solution that is proposed in claims 1 and 8 is to endow the RMS with a modular configuration that will enable the different parts of the mechanism to be disassembled in a simple way, without this affecting the structural connections whose reliability is the factor on which the integrity of the RMS depends. Thus, any user may dismantle the RMS into the various main modules, whether for cleaning, lubricating, replacing a part that may have been damaged, or simply for a new choice of components, such as: changing the cranks for reasons of size or color, replacing the bottom bracket spindle support through having changed the bicycle frame with a different type of thread - English or Italian - and so on.

In addition, this modular construction of the RMS improves the execution of the RMS with the required sealing, resulting in less friction in the components and, therefore, providing a stronger sales argument and even a certain improvement in mechanical efficiency.

### DESCRIPTION OF THE MECHANISM

To achieve this modularity, it is necessary for the links not to be anchored axially to their respective swivel pins. Their axial positioning in the mechanism will be determined simply by being flanked on one side by the power plate and on the other by the first crank or by the transfer arm. The swivel pins, however, as they are fundamental anchorages of the mechanism, will be fixed to each part: two of them to the power plate, one to the first crank and the other to the transfer arm, and it will not be necessary to touch them in order to dismantle the mechanism into the different parts or modules. Thus, on the side where the link is mounted, each swivel pin will be free of restrictions limiting axial displacement in the direction of said side, of the link or of its respective bearing in it.

Each swivel pin could be made of various parts, for instance of a screw coupling the inner ring of a needle bearing.

In addition, the axial bottom bracket spindle fastening that secures it in its support in its movement towards the power plate side is such that it may be removed easily from the side opposite to that of said plate. The second crank could be used as the element for this fastening, either directly or by means of a support bushing or washer, a nut, or any other axial fixing element for spindles, such as snap rings. The spindle in turn is designed so that when this axial fastening is removed, it way be withdrawn from its support or cartridge by pulling it from the power plate side, or pushing it from its end on the opposite side.

In this way, when the second crank is removed from the side opposite the power plate, and in any case after the element securing the spindle in its support has been withdrawn, upon pulling the spindle from the other side, we will be taking out the spindle with the transfer arm and the adjoining crank, and both links will be released in the axial direction, so that they may be cleaned, lubricated, replaced or worked on in any other way. We will call therefore the axial release of the spindle the first step, and the withdrawal of the spindle from the power plate side as the second step.

In addition, the first crank on the power plate side is only anchored axially to the bottom bracket spindle, so that it may be removed by simply taking off a fastening.

The necessary watertightness at the bearings or points of rotation corresponding to the swivel pins will be achieved if the accesses are sealed from both sides of the link. To this end, on the inner side of the swivel pin, where there will be angular sliding between the link and the swivel pin, an oil seal may be provided that will normally form part of the actual bearing used, for example on needle bearings with a cage sealed on one of their sides ("HK..RS" type), and on the opposite side the sealing will be total as, since there is no slip, a blind or merely capped link may be used, or else a blind bearing, such as sealed blind needle bearings ("BK..RS" type).

In this way, sealing is going to be strongly reinforced as the outer side of the swivel pin bearing was the most exposed to the entry of water. What is more, the friction entailed in this type of sealing is very low, as it does not involve axial tightening but radial tightening of the oil seal, and only on one of the sides at each swivel pin.

A possible added improvement would be to fit grease fittings, or else simply holes, which could be sealed with plugs or screws, in the caps of the links, or if the link is blind, in each side that acts as a cap.

By implementing the following conditions we obtain a mechanism of the RMS type made up of the following modules:
■ bottom bracket spindle support or cartridge, adjoining the eccentric element and the power plate;
■ first and second links;
■ bottom bracket spindle, which couples the transfer arm and the first crank, the latter being removable.

It may be seen that, to dismantle the mechanism on these modules, it is not even necessary to remove the bottom bracket spindle support from the bicycle.

As the two-way axial fastenings on the links have disappeared, the restrictions that made the structure hyperstatic also disappear, and we thereby achieve the simplest maintenance at the critical rotation points of the mechanism, which are the bearings corresponding to the links and to the bottom bracket spindle, and in any case getting the RMS stripped down into main modules from which it is possible to carry out any after-sales servicing, such as replacing a part or bearing, proves extremely simple.

Furthermore, there are a number of added advantages for the manufacture of the system:
■ during the assembly of the product, as the swivel pin and link installation stages are separated, the use of adhesives and lubricants does not coincide in the same operation;
■ through dispensing with the axial fastenings of the links, the number of parts making up the mechanism is reduced;
■ as the installation of the first crank is now much simpler, stock may be reduced due to the wide range of crank sizes that each mechanism can take.

Finally, optimization of the system sealing, which was essential for its commercial viability, through avoiding use of O-rings with axial tightening towards the bearing, results in reduced friction, which is reflected in higher commercial and mechanical efficiency, with the result that sporting performance is enhanced.

### SHORT DESCRIPTION OF THE FIGURES

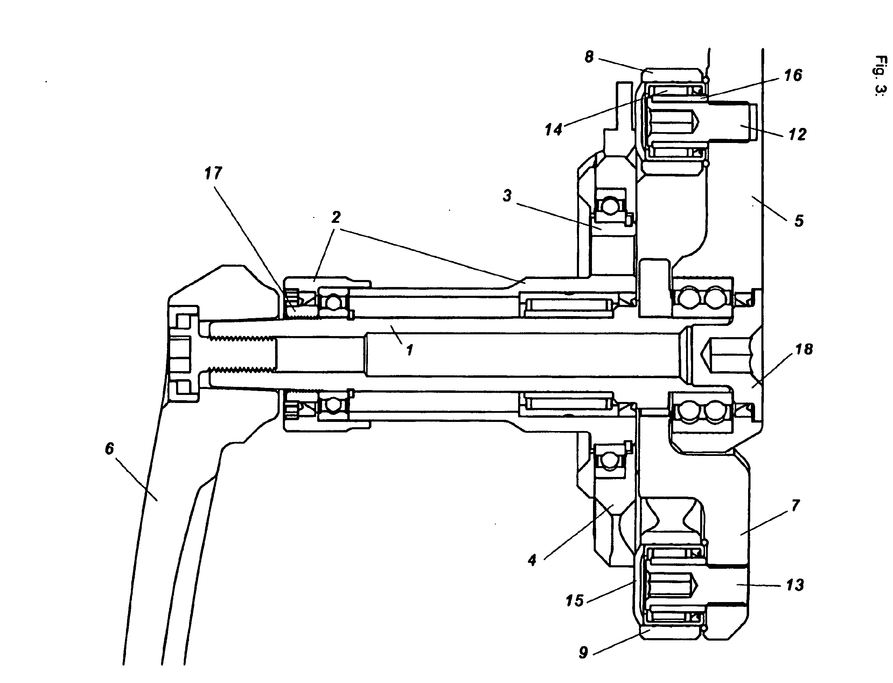

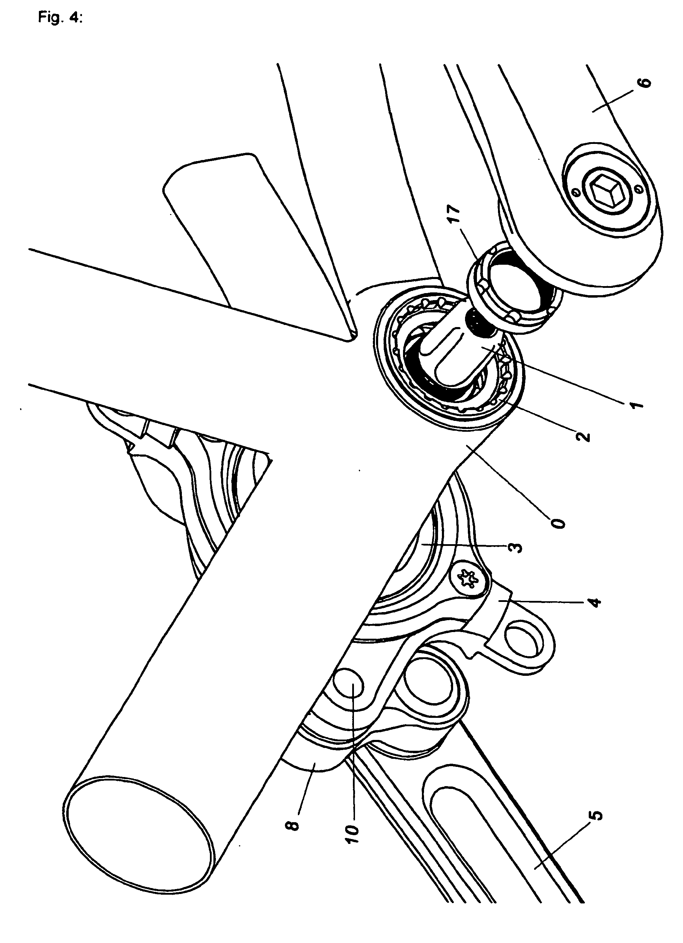

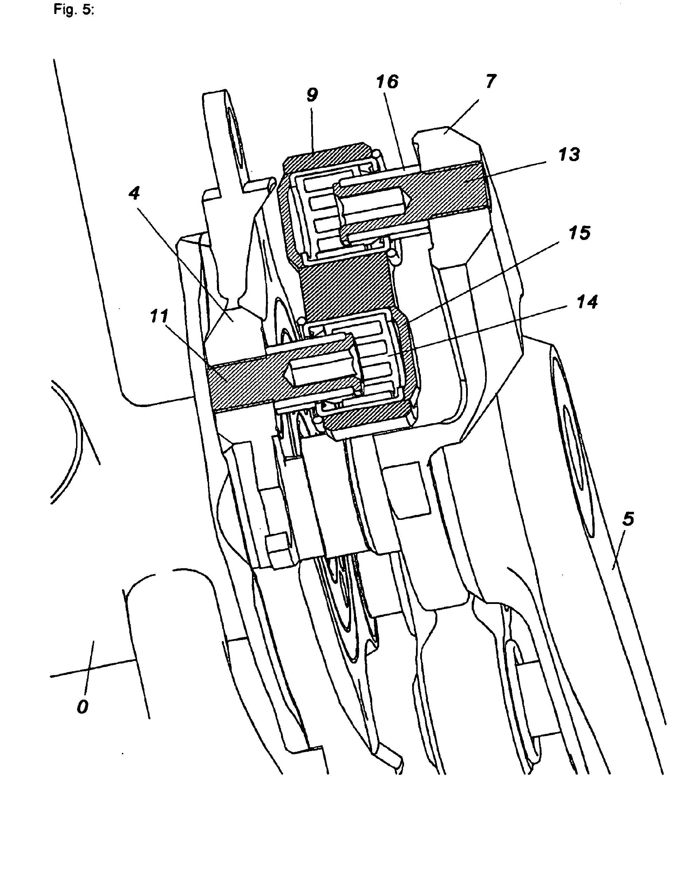

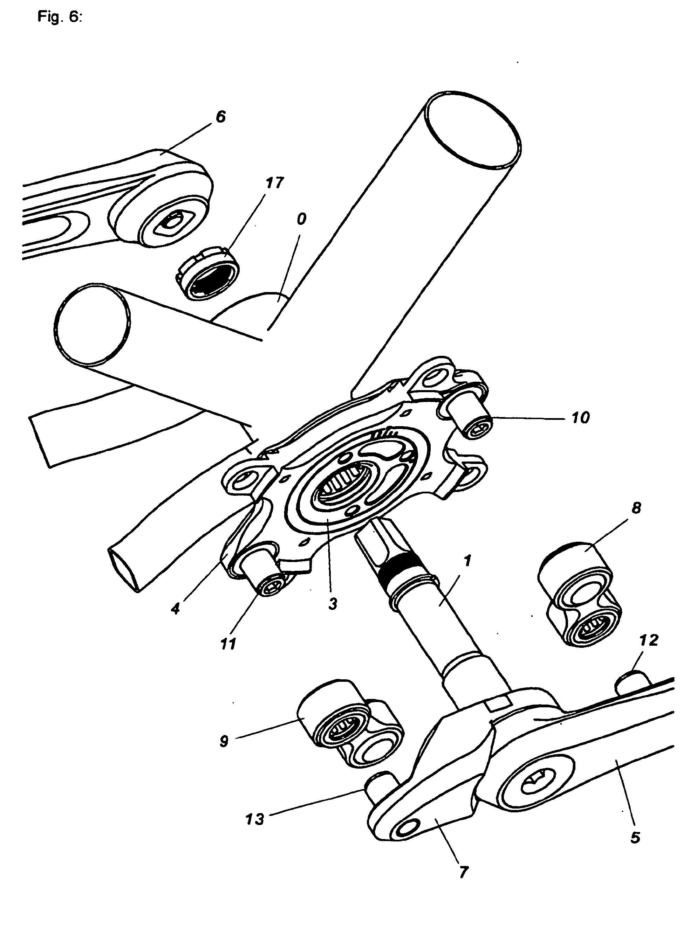

■ *Figure 1* shows an example of the RMS, which corresponds to the afore-mentioned RCK.
*■ Figure* 2 shows the mechanism corresponding to the present patent application.
*■ Figure 3* shows a cross section of said mechanism in which we may appreciate the different component parts.
*■ Figure 4* shows the first step for detaching said mechanism on the different modules.
*■ Figure 5* shows the second step for detaching said mechanism on the different modules, showing a sectional view of one of the links in which we appreciate the free axial sliding between the swivel pins and the links.
*■ Figure 6* shows said mechanism detached on the different modules.

### DETAILED EXPLANATION OF ONE MODE OF EMBODIMENT OF THE INVENTION

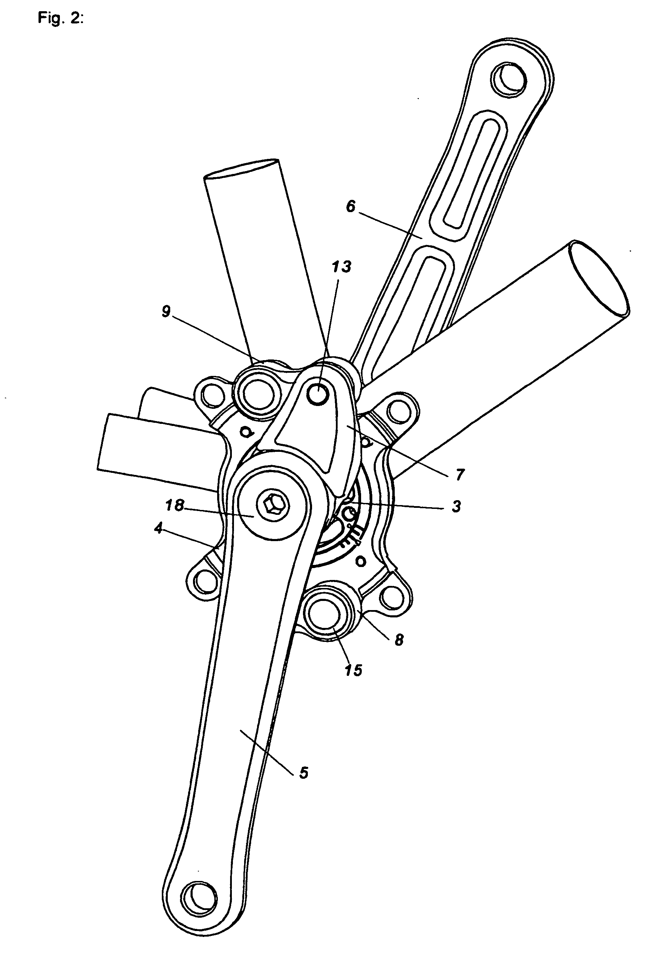

A preferred mode of embodiment is the modular configuration RMS corresponding to figures 2 to 6. Said mechanism consists of:
- a bottom bracket spindle (1), with the bearings and support (2) necessary for it to be coupled to said bottom bracket shell (0);
- a power plate (4) that turns at its center around an axis away from and parallel to the bottom bracket spindle, which is provided with the means for mounting chainrings and which is the system power output, via said chainrings;
- and eccentric support (3), integral with the bottom bracket spindle support on the right-hand side, which is eccentric in relation to said bottom bracket spindle and which has the function of supporting said power plate with freedom of rotation;
- two independent cranks: the right-hand one (5) is free-turning in relation to the bottom bracket spindle, and the left-hand one (6) is integral with said spindle;
- a transfer arm (7), which is anchored to the bottom bracket spindle, positioned between the power plate and the right-hand crank and is integral with the left-hand crank by means of the bottom bracket spindle; and
- two links, the first (8) joined by one of its ends to the right-hand crank and by the other end to the power plate, and the second (9) joined by one of its ends to the transfer arm and by the other end to the power plate, being these four joints per swivel pin, the two swivel pins (10 and 11) corresponding to the power plate are positioned at diametrically opposite points of said plate, and the distances to the bottom bracket spindle from the other two swivel pins (12 and 13) are the same.

Where each link is disposed as a puller, and mounts two needle bearings HK1214-RS (14) at its ends both sealed with caps (15) on its alternate faces (one cap per face of each link).

Where each swivel pin mounts the inner ring (16) of a needle bearing, and it is free of restrictions limiting the axial movement of the needle bearing mounted in the links, towards the outside of the swivel pin.

And where the axial fastening of the bottom bracket spindle securing it to its support in its movement to the right side is a nut (17), such that it may be removed easily from the left-hand side of the spindle once the left-hand crank has been taken off; and furthermore, the spindle is so designed that, once this nut has been taken off, it may be withdrawn from its support or cartridge by pulling to the right or pushing it from its left end.

Therefore, once the left-hand crank and said nut have been removed *(figure 4),* by simply pulling the spindle from the right-hand side (*figure 5*) we will be dismantling the assembly into its four main modules *(figure* 6):
■ bottom bracket spindle support or cartridge, adjoining the eccentric element and the power plate;
■ first and second links;
■ bottom bracket spindle, which mounts the transfer arm and the right-hand crank, the latter being removable by simply taking out its screw (18).

Due to the way they are arranged, it is possible to detach the modules, for instance for cleaning or greasing, without any need to remove the bottom bracket support or cartridge from the bicycle, nor the chainrings from the power plate either.

### OTHER POSSIBILITIES

The mechanism proposed may be used on all kinds of pedal-driven vehicles: traditional bicycles (road, off-road, urban, touring, track, trial, BMX...), recumbent bicycles, static bicycles, tandems, etc., although certain modifications may be necessary in some cases.

In the case of traditional bicycles, practically the only thing that changes is the number of chain wheels that may be mounted on the power plate, which is usually 1, 2 or 3.

The case of recumbent bicycles is the same as the previous one, but with a variation in its mounting on the vehicle, as the dead centers are no longer top and bottom but fore and aft, the mechanism will have to be installed turning backwards.

In the case of static bicycles the power plate may be toothed and thereby save the use of chain wheels, or else it may be a belt drive pulley.

In the case of tandems a chainring may be used coupled to the left-hand crank connecting the mechanisms at each pedaling station. In this case, for the mechanism to drive the wheel, the plate attached to the left-hand crank will be an additional power input, and for the rest of the mechanisms that the tandem mounts (usually one at the front rider's station) the system power output will be precisely the left-hand crank, instead of the power plate, which will also be acting as a synchronizing drive element.

## Claims

1. A mechanical pedaling system which may be coupled to the bottom bracket shells of bicycles and the like and consists of:
• a bottom bracket spindle (1); with the bearings and support (2) needed for coupling to said bottom bracket shell (0);
• a power plate (4), which rotates at its center around an axis away from and parallel to the bottom bracket spindle (1), and is the system power output;
• an eccentric support (3), attachable to the bottom bracket shell by one of its sides, which is eccentric in relation to the bottom bracket spindle and which is intended to support said power plate with freedom of rotation;
• two cranks (5, 6), the first (5) is free-turning in relation to the bottom bracket spindle and it is positioned on the power plate side; and the second (6) is integral with said spindle and is positioned at the opposite end of the same;
• a transfer arm (7), which is positioned on the power plate side and is integral with the second crank by means of the bottom bracket spindle;
• and two links (8, 9), the first connected by one of its ends to the first crank (5) and by the other end to the power plate, and the second (9) connected by one of its ends to said transfer arm (7) and by the other end to the power plate, these four joints being by means of swivel pins (10, 11), with the two swivel pin joints corresponding to the power plate being at opposite points of said plate;
**characterized in that** said parts, with the exception of the second crank, form four main modules:
■ bottom bracket spindle support, adjoining the eccentric support and the power plate;
■ first and second links;
■ bottom bracket spindle, which mounts the transfer arm and the right-hand crank;
whose sole fastening in an axial direction, which prevents the mechanism that is made up of said modules from being disassembled into these, is the one that prevents the sliding of the bottom bracket spindle in its support in an axial direction towards the power plate side.

2. A mechanical pedaling system according to claim 1, **characterized in that** every one of said swivel pins (11, 13) are free of restrictions that limit the axial sliding of the link (8, 9) towards the opposite side to the part to which each swivel pin is anchored.

3. A mechanical pedaling system according to claim 1, **characterized in that** said single fastening in an axial direction that prevents the movement of the bottom bracket spindle (1) in said direction towards the side of the power plate (4) is the second crank (6), resting directly on the bearing supporting the spindle in its support on the side of said crank.

4. A mechanical pedaling system according to claim 1, **characterized in that** said single fastening in an axial direction that prevents the movement of the bottom bracket spindle (1) in said direction towards the side of the power plate (4) is the second crank (6) resting by means of a bushing or washer on the bearing that supports the spindle in its support on the side of said crank.

5. A mechanical pedaling system according to claim 1, **characterized in that** said single fastening in an axial direction that prevents the movement of the bottom bracket spindle (1) in said direction towards the power plate side (4) is a nut (17) on the side of the second crank.

6. A mechanical pedaling system according to claim 1, **characterized in that** said single fastening which prevents the movement of the bottom bracket spindle (1) in said direction towards the power plate side (4) is a snap ring on the second crank side.

7. A mechanical pedaling system according to claim 2, **characterized in that** each link mounts bearings (14) at its ends, and each face of said link is provided with a single opening to the outside for the coupling of the swivel pins.

8. A mechanical pedaling system which may be coupled to the bottom bracket shells of bicycles and the like and which consists of:
• a bottom bracket spindle (1), with the bearings and the support (2) needed for it to be coupled to said bottom bracket shell (0);
• a power plate (4), which turns at its center around an axis away from and parallel to the bottom bracket spindle (1) and which is the system power output;
• an eccentric support (3), attachable to the bottom bracket shell by one of its sides, which is eccentric in relation to the bottom bracket spindle and which is intended to support said power plate with freedom of rotation;
• two cranks (5, 6) : the first (5) is free-turning in relation to the bottom bracket spindle and it is positioned on the power plate side; and the second (6) is integral with said spindle and is positioned at the opposite end of the same;
• a transfer arm (7), which is positioned on the power plate side and is integral with the second crank by means of the bottom bracket spindle;
• and two links (8, 9) the first connected by one of its ends to the first crank (5) and by the other end to said power plate, and the second (9) connected by one of its ends to said transfer arm (7) and by the other end to the power plate, where these four joints are by means of swivel pins (10, 11) and the two swivel pin joints corresponding to the power plate are at opposite points of said plate;
**characterized in that** the links (8, 9) are not anchored axially to their corresponding swivel pins and **in that**, on the side on which the link is coupled, each of them is free of restrictions that limit the axial sliding of the link towards the side opposite to the part to which each swivel pin is anchored.

9. A mechanical pedaling system according to claim 8, **characterized in that** the bottom bracket spindle (1) has a single axial fastening that secures it in its movement towards the power plate side, which may be withdrawn from the side opposite the power plate, and the spindle is in turn designed in such a way that, once this axial fastening is removed, it may be withdrawn from its support towards the power plate side.

10. A mechanical pedaling system according to claim 9, **characterized in that** said bottom bracket spindle axial fastening which secures its movement towards the power plate side is the second crank (6).

11. A mechanical pedaling system according to claim 9, **characterized in that** said bottom bracket spindle axial fastening which secures its movement towards the power plate side is a nut (17).

12. A mechanical pedaling system according to claim 9, **characterized in that** said bottom bracket spindle axial fastening which secures its movement towards the power plate (4) side is a snap ring for spindles.

13. A mechanical pedaling system according to claim 8, **characterized in that** each link mounts bearings (14) at its ends, and each face of said link is provided with a single opening to the outside for coupling the swivel pins.

14. A mechanical pedaling system according to claim 13, **characterized in that** said link bearings (14) are the needle type with a cage and sealed on the side on which the link has its opening.

15. A mechanical pedaling system according to claim 13, **characterized in that** said link bearings (14) correspond to the bearing reference: HK1214-RS.

## Patentansprüche

1. Mechanisches Pedalsystem, das mit Tretlagergehäusen von Fahrrädern und dergleichen gekoppelt werden kann, und bestehend aus:
einer Tretlagerachse (1) mit Lagern und Aufnahme (2), die zum Koppeln mit dem Tretlagergehäuse (0) benötigt werden;
eine Antriebsscheibe (4), die an ihrem Zentrum um eine Achse rotiert, die entfernt von und parallel zu der Tretlagerachse (1) ist, und der Systemleistungsantrieb ist;
eine exzentrische Aufnahme (3), die mit einer ihrer Seiten an dem Tretlagergehäuse befestigbar ist, die exzentrisch in Bezug auf die Tretlagerachse ist und vorgesehen ist, die Antriebsscheibe unter Rotationsfreiheit aufzunehmen;
zwei Kurbeln (5, 6), wobei die erste (5) frei drehend ist in Bezug auf die Tretlagerachse und auf der Antriebsscheibenseite angeordnet ist; und die Zweite (6) integral mit der Achse ist und am gegenüberliegenden Ende derselben angeordnet ist;
ein Transferarm (7), der auf der Antriebsscheibenseite angeordnet ist und integral mit der zweiten Kurbel mittels der Tretlagerachse ist;
und zwei Gelenkstücke (8, 9), wobei das Erste mit einem seiner Enden mit der ersten Kurbel (5) und mit dem anderen Ende mit der Antriebsscheibe verbunden ist und das Zweite (9) mit einem seiner Enden mit dem Transferarm (7) und mit dem anderen Ende mit der Antriebsscheibe verbunden ist, wobei diese vier Verbindungen mittels Drehzapfen (10, 11) ausgeführt sind, wobei die zwei Drehzapfenverbindungen, die mit der Antriebsscheibe korrespondieren, an gegenüberliegenden Punkten der Scheibe angeordnet sind;
**dadurch gekennzeichnet, dass** die Teile mit Ausnahme der zweiten Kurbel vier Hauptmodule bilden:
eine Tretlagerachsenaufnahme, die an die exzentrische Aufnahme und die Antriebsscheibe angrenzt,
ein erstes und zweites Gelenkstück ;
eine Tretlagerachse, die den Transferarm und die rechte Kurbel befestigt,
deren einzige Befestigung in einer axialen Richtung, die den Mechanismus, der aus den Modulen aufgebaut ist, hindert, sich in diese zu zerlegen, ist die, die das Gleiten der Tretlagerachse in ihrer Aufnahme in einer axialen Richtung in Richtung auf die Antriebsscheibenscite verhindert.

2. Mechanisches Pedalsystem gemäß Anspruch 1, **dadurch gekennzeichnet, dass** jeder der Drehzapfen (11, 13) frei von Begrenzungen ist, die das axiale Gleiten der Gelenkstücke (8, 9) in Richtung auf die gegenüberliegende Seite zu dem Teil einschränken, an dem jeder Drehzapfen verankert ist.

3. Mechanisches Pedalsystem gemäß Anspruch 1, **dadurch gekennzeichnet, dass** die einzelne Befestigung in einer axialen Richtung, die die Bewegung der Tretlagerachse (1) in die Richtung auf die Seite, der Antriebsscheibe (4) verhindert, die zweite Kurbel (6) ist, die unmittelbar auf dem Lager ruht, das die Achse in seiner Aufnahme auf der Seite der Kurbel aufnimmt.

4. Mechanisches Pedalsystem gemäß Anspruch 1, **dadurch gekennzeichnet, dass** die einzelne Befestigung in einer axialen Richtung, die die Bewegung der Tretlagerachse (1) in die Richtung auf die Seite der Antriebsscheibe (4) verhindert, die zweite Kurbel (6) ist, die mittels Hülse oder Scheibe auf dem Lager ruht, das die Achse in ihrer Aufnahme auf der Seite der Kurbel aufnimmt.

5. Mechanisches Pedalsystem gemäß Anspruch 1, **dadurch gekennzeichnet, dass** die einzelne Befestigung in einer axialen Richtung, die die Bewegung der Tretlagerachse (1) in die Richtung auf die Antriebsscheibe (4) verhindert, eine Mutter (17) auf der Seite der zweiten Kurbel ist.

6. Mechanisches Pedalsystem gemäß Anspruch 1, **dadurch gekennzeichnet, dass** die einzelne Befestigung, die die Bewegung der Tretlagerachse (1) in die Richtung auf die Antriebsscheibe (4) verhindert, ein Sicherungsring auf der Seite der zweite Kurbel ist.

7. Mechanisches Pedalsystem gemäß Anspruch 2, **dadurch gekennzeichnet, dass** jedes Gelenkstück Lager (14) an seinen Enden aufnimmt, und dass jede Fläche des Gelenkstücks mit einer einzelnen Öffnung nach außen zum Koppeln der Drehzapfen versehen ist.

8. Mechanisches Pedalsystem, das mit Tretlagergehäusen von Fahrrädern und dergleichen gekoppelt werden kann und besteht aus:
eine Tretlagerachse (1) mit Lagern und Aufnahme (2), die dafür benötigt werden, um an das Tretlagergehäuse (0) gekoppelt zu werden;
eine Antriebsscheibe (4), die an ihrem Zentrum um eine Achse dreht, die entfernt von und parallel zu der Tretlagerachse (1) ist, und die der Systemleistungsantricb ist;
eine exzentrische Aufnahme (3), die mit einer ihrer Seiten an das Treflagergehäuseanbringbar ist, die exzentrisch in Bezug auf die Tretlagerachse ist und vorgesehen ist, die Antriebsscheibe unter Rotationsfreiheit aufzunehmen ;
zwei Kurbeln (5, 6), die Erste (5) ist frei drehend in Bezug auf die Tretlagerachse und ist auf der Antriebsscheibenseite angeordnet; und die Zweite (6) ist integral mit der Achse und ist am gegenüberliegenden Ende derselben angeordnet;
ein Transferarm (7), der auf der Antriebsscheibenseite angeordnet ist und integral mit der zweiten Kurbel mittels der Tretlagerachse ist;
und zwei Gelenkstücke (8, 9), wobei das Erste mit einem seiner Enden mit der ersten Kurbel (5) und mit dem anderen Ende mit der Antriebsscheibe verbunden ist und das Zweite (9) mit einem seiner Enden mit dem Transferarm (7) und mit dem anderen Ende mit der Antriebsscheibe verbunden ist, wobei diese vier Verbindungen mittels Drehzapfen (10, 11) aufgeführt sind und die zwei Drehzapfenverbindungen, die mit der Antriebsscheibe korrespondieren, an gegenüberliegenden Punkten der Scheibe angeordnet sind;
**dadurch gekennzeichnet, dass** die Gelenkstücke (8, 9) nicht axial an deren korrespondierenden Drehzapfen verankert sind und dass auf der Seite, auf der das Gelenkstücke gekoppelt ist, jede von diesen frei von Begrenzungen ist, die das axiale Gleiten des Gelenkstücks in Richtung auf die Seite einschränken, die gegenüberliegend zu dem Teil ist, an dem jeder Drehzapfen verankert ist.

9. Mechanisches Pedalsystem gemäß Anspruch 8, **dadurch gekennzeichnet, dass** die Tretlagerachse (1) eine einzelne axiale Befestigung aufweist, die sie in ihrer Bewegung in Richtung auf die Antriebsscheibenseite sichert, die von der der Antriebsscheibe gegenüberliegenden Seite zurückgezogen werden kann, und die Achse wiederum in einer derartigen Weise entworfen ist, dass sie von ihrer Aufnahme in Richtung auf die Antriebsscheibenseite zurückgezogen werden kann.

10. Mechanisches Pedalsystem gemäß Anspruch 9, **dadurch gekennzeichnet, dass** die axiale Befestigung der Tretlagerachse, die ihre Bewegung in Richtung auf die Antriebsscheibenseite sichert, die zweite Kurbel (6) ist.

11. Mechanisches Pedalsystem gemäß Anspruch 9, **dadurch gekennzeichnet, dass** die axiale Befestigung der Tretlagerachse, die ihre Bewegung in Richtung auf die Antriebsscheibenseite sichert, eine Mutter (17) ist.

12. Mechanisches Pedalsystem gemäß Anspruch 9, **dadurch gekennzeichnet, dass** die axiale Befestigung der Tretlagerachse, die ihre Bewegung in Richtung auf die Seite der Antriebsscheibe (4) sichert, ein Sicherungsring für Achsen ist.

13. Mechanisches Pedalsystem gemäß Anspruch 8, **dadurch gekennzeichnet, dass** jedes Gelenkstück Lager (14) an seinen Enden aufnimmt, und dass jede Fläche des Gelenkstücks mit einer einzelnen Öffnung nach außen zum Koppeln der Drehzapfen versehen ist.

14. Mechanisches Pedalsystem gemäß Anspruch 13, **dadurch gekennzeichnet, dass** die Gelenkstücklager (14) vom Nadeltyp mit einem Käfig sind und auf der Seite, auf der das Gelenkstück seine Öffnung aufweist, gedichtet sind.

15. Mechanisches Pedalsystem gemäß Anspruch 13, **dadurch gekennzeichnet, dass** die Gelenkstücklager (14) der Lagerreferenz: HK1214-RS entsprechen.

## Revendications

1. Système de pédalier mécanique qui peut être relié au support de pédalier de bicyclettes et similaires et qui comprend :
• un axe de pédalier (1) avec les roulements et le support (2) nécessaires pour qu'il soit relié audit support de pédalier (U) ;
• un plateau d'entraînement (4) qui tourne en son centre autour d'un axe distant de l'axe de pédalier (1) et parallèle à celui-ci, et produisant la puissance de sortie du système ;
• un organe de support excentrique (3) apte à être fixé au support de pédalier par un de ses côtés, qui est excentrique par rapport à l'axe de pédalier et qui est destiné à recevoir ledit plateau d'entraînement avec une liberté de rotation ;
• deux pédales (5, 6) : la première (5) tourne librement par rapport à l'axe de pédalier et elle est disposée du côté du plateau d'entraînement ; et la deuxième (6) fait corps avec ledit axe et est disposée à l'extrémité opposée du même plateau ;
• un bras de transfert (7), qui est disposé du côté du plateau d'entraînement et fait corps avec la deuxième pédale au moyen de l'axe de pédalier ;
• et deux organes de liaison (8, 9), dont le premier est relié par une de ses extrémités à la première pédale (5) et par l'autre extrémité au plateau d'entraînement, et dont le deuxième (9) est relié par une de ses extrémités audit bras de transfert (7) et par l'autre extrémité relié au plateau d'entraînement, ces quatre liaisons se faisant au moyen d'axes (10, 11) formant pivot, les deux liaisons par axes formant pivot qui correspondent au plateau d'entraînement étant situées en des points opposés dudit plateau ;
**caractérisé en ce que** lesdits éléments, à l'exception de la deuxième pédale, forment quatre modules principaux :
• un support d'axe de pédalier, adjacent à l'organe de support excentrique et au plateau d'entraînement ;
• un premier et un second organes de liaison ;
• un axe de pédalier, qui comporte le bras de transfert et la pédale de droite ;
dont la seule fixation dans une direction axiale, qui empêche le mécanisme qui est composé desdits modules de se désassembler, est celle qui empêche le coulissement de l'axe de pédalier dans son support dans une direction axiale du côté du plateau d'entraînement.

2. Système de pédalier mécanique selon la revendication 1, **caractérisé en ce que** chacun desdits axes formant pivot (11, 13) sont exempts de restrictions qui limitent le coulissement axial de l'organe de liaison (8, 9) vers le côté opposé à la pièce à laquelle chaque axe formant pivot est relié,

3. Système de pédalier mécanique selon la revendication 1, **caractérisé en ce que** ladite fixation unique dans une direction axiale qui empêche le mouvement de l'axe de pédalier (1) dans ladite direction orientée vers le côté du plateau d'entraînement (4) est la deuxième pédale (6), reposant directement sur le palier supportant l'axe dans son support situé du côté de ladite pédale.

4. Système de pédalier mécanique selon la revendication 1, **caractérisé en ce que** ladite fixation unique dans une direction axiale qui empêche le mouvement de l'axe de pédalier (1) dans ladite direction orientée vers le côté du plateau d'entraînement (4) est la deuxième pédale (6), reposant au moyen d'une douille ou d'une rondelle sur le palier qui supporte l'axe dans son support situé du côté de ladite pédale.

5. Système de pédalier mécanique selon la revendication 1, **caractérisé en ce que** ladite fixation unique dans une direction axiale qui empêche le mouvement de l'axe de pédalier (1) dans ladite direction orientée vers le côté du plateau d'entraînement (4) est un écrou (17) situé du côté de la deuxième pédale.

6. Système de pédalier mécanique selon la revendication 1, **caractérisé en ce que** ladite fixation unique qui empêche le mouvement de l'axe de pédalier (1) dans ladite direction orientée vers le côté du plateau d'entraînement (4) est un anneau à ressort situé du côté de la deuxième pédale.

7. Système de pédalier mécanique selon la revendication 2, **caractérisé en ce que** chaque organe de liaison comporte des roulements (14) à ses extrémités, et **en ce que** chacune des faces desdits organes de liaison comprend une ouverture unique vers l'extérieur pour le montage des axes formant pivot.

8. Système de pédalier mécanique qui peut être relié au support de pédalier de bicyclettes et similaires et qui comprend :
• un axe de pédalier (1) avec les roulements et le support (2) nécessaires pour qu'il soit relié audit support de pédalier (0) ;
• un plateau d'entraînement (4) qui tourne en son centre autour d'un axe distant de l'axe de pédalier (1) et parallèle à celui-ci, et produisant la puissance de sortie du système ;
• un organe de support excentrique (3) apte à être fixé au support de pédalier par un de ses côtés, qui est excentrique par rapport à l'axe de pédalier et qui est destiné à recevoir ledit plateau d'entraînement avec une liberté de rotation ;
• deux pédales (5, 6) : la première (5) tourne librement par rapport à l'axe de pédalier et elle est disposée du côté du plateau d'entraînement ; et la deuxième (6) fait corps avec ledit axe et est disposée à l'extrémité opposée du même plateau ;
• un bras de transfert (7), qui est disposé du côté du plateau d'entraînement et fait corps avec la deuxième pédale au moyen de l'axe de pédalier ;
• et deux organes de liaison (8, 9), le premier étant relié par une de ses extrémités à la première pédale (5) et par l'autre extrémité au plateau d'entraînement, et le deuxième (9) étant relié par une de ses extrémités audit bras de transfert (7) et par l'autre extrémité au plateau d'entraînement, ces quatre liaisons se faisant au moyen d'axes formant pivot (10, 11), les deux liaisons par axes formant pivot qui correspondent au plateau d'entraînement étant situées en des points opposés dudit plateau ;
**caractérisé en ce que** les organes de liaison (8, 9) ne sont pas reliés axialement à leurs axes formant pivot correspondants et **en ce que**, du côté sur lequel l'organe de liaison est relié, chacun d'eux est exempt de restrictions qui limitent le coulissement axial de l'organe de liaison en direction du côté opposé à la pièce à laquelle chaque axe formant pivot est relié.

9. Système de pédalier mécanique selon la revendication 8, **caractérisé en ce que** l'axe de pédalier (1) comprend une fixation axiale unique qui le maintien dans son mouvement en direction du côté du plateau d'entraînement, qui peut être retiré depuis le côté opposé au plateau d'entraînement, et **en ce que** l'axe est conçu de telle sorte que, une fois que cette fixation axiale est enlevée, il peut être retiré de son support en direction du côté du plateau d'entraînement.

10. Système de pédalier mécanique selon la revendication 9, **caractérisé en ce que** ladite fixation axiale dudit axe de pédalier qui bloque son mouvement en direction du côté du plateau d'entraînement est la deuxième pédale (6).

11. Système de pédalier mécanique selon la revendication 9, **caractérisé en ce que** ladite fixation axiale dudit axe de pédalier qui bloque son mouvement en direction du côté du plateau d'entraînement est un écrou (17).

12. Système de pédalier mécanique selon la revendication 9, **caractérisé en ce que** ladite fixation axiale dudit axe de pédalier qui bloque son mouvement en direction du côté du plateau d'entraînement (4) est un anneau à ressort pour axes.

13. Système de pédalier mécanique selon la revendication 8, **caractérisé en ce que** chaque organe de liaison comporte des roulements (14) à ses extrémités, et **en ce que** chacune des faces desdits organes de liaison est équipée d'une ouverture unique tournée vers l'extérieur pour le montage des axes formant pivot.

14. Système de pédalier mécanique selon la revendication 13, **caractérisé en ce que** lesdits roulements de liaison (14) sont de type aiguille avec une cage et scellés sur le côté sur lequel l'organe de liaison comprend son ouverture.

15. Système de pédalier mécanique selon la revendication 13, **caractérisé en ce que** lesdits roulements de liaison (14) correspondent à la référence de roulement : HK1214-RS.
